# EUROPÄISCHE PATENTSCHRIFT

(11) **EP 0 695 873 B1**
(45) Veröffentlichungstag und Bekanntmachung des Hinweises auf die Patenterteilung: **16.09.1998**
(21) Anmeldenummer: 95111382.8
(22) Anmeldetag: 20.07.1995
(51) Int. Cl.: F04D 19/04, F04D 29/04

(54) **Fluteinrichtung für magnetisch gelagerte Vakuumpumpen**
Venting system for vacuum pump with magnetic bearings
Système de remise à l'air pour pompes à vide à paliers magnétiques

(30) Priorität: 01.08.1994 DE 4427153
(43) Veröffentlichungstag der Anmeldung: 07.02.1996
(73) Patentinhaber: Pfeiffer Vacuum GmbH, 35614 Asslar (DE)
(72) Erfinder: Larsonneur, René, CH-8304 Wallisellen (CH); Bernhardt, Helmut, D-35584 Wetzlar (DE)

(56) Entgegenhaltungen:
- DE-A- 1 809 902
- DE-A- 2 034 327
- DE-A- 4 022 523

## Beschreibung

Die Erfindung betrifft eine Fluteinrichtung für magnetisch gelagerte Vakuumpumpen nach dem Oberbegriff des ersten Patentanspruches. Insbesondere bezieht sich die Erfindung auf solche Vakuumpumpen, welche mit einem schnell laufenden Rotor ausgerüstet sind.

Zu den am weitesten verbreiteten schnell rotierenden Vakuumpumpen gehören die Turbomolekularpumpen. An deren Beispiel soll im folgenden die Aufgabenstellung und deren Lösung erläutert werden.

Turbomolekularpumpen gewährleisten durch ihr selektives Pumpverhalten eine öldampffreie Pumptechnik. Wird aber eine Turbomolekularpumpe außer Betrieb gesetzt, dann können Öldämpfe oder andere Verunreinigungen von der Vorvakuumseite zur Hochvakuumseite gelangen und dort eine erhebliche Verunreinigung hervorrufen, welche sich als Anfangsverschmutzung beim Wiedereinschalten der Pumpe sehr nachteilig bemerkbar macht. Die Verunreinigungen, insbesondere Kohlenwasserstoffe und Wasser haben eine beträchtliche Verlängerung der Auspumpzeit zur Folge. Dies kann verhindert werden, wenn die Turbomolekularpumpe nach dem Abschalten mit Inertgas geflutet wird. Dadurch werden die inneren Oberflächen der Pumpe und des Rezipienten mit dem Inertgas belegt, wodurch sich die Pumpzeit nach Wiedereinschalten wesentlich verkürzt. Außerdem bewirkt das Fluten eine Verkürzung der Auslaufzeit des Rotors. Ein Kriterium, welches besonders bei Pumpen mit Magnetlagerung wegen der fehlenden Reibung von Bedeutung ist.

Turbomolekularpumpen mit Fluteinrichtungen werden in der DE-PS 18 09 902 und in der Zeitschrift "Vakuumtechnik" 20. Jahrgang (1971) Heft 7, Seite 201 ff beschrieben.

Aus diesen Veröffentlichungen geht hervor, daß einige Flutbedingungen optimal festgelegt werden konnten, um eine möglichst kurze Auspumpzeit nach Wiedereinschalten der Pumpe zu erlangen. Ein wichtiges Problem jedoch ist seither nur in äußerst unbefriedigender Weise behandelt worden. Dies betrifft die Flutrate. Die Fragestellung hierbei ist, mit welcher Geschwindigkeit das Flutgas in die Pumpe eingelassen werden soll, um die optimalen Flutbedingungen weiter zu verbessern, und um vor allem nachteilige Einwirkungen zu vermeiden.

Dieses Problem besteht im besonderen Maße bei magnetisch gelagerten Pumpen. Die Kriterien, die hier vor allem in Betracht gezogen werden müssen, sind die lange Auslaufzeit, welche durch die fehlende Reibung bedingt ist, und die Begrenzung von äußeren Kräften, welche auf den Rotor wirken.

Die Frage der Flutrate reduziert sich zunächst auf den Querschnitt der Ventilöffnung. Bei kleinem Querschnitt, d.h. wenn die Pumpe zu langsam geflutet wird, ergibt sich eine zu lange Auslaufzeit des Rotors, welche in den meisten Anwendungsfällen nicht mehr vertreten werden kann.

Bei großem Querschnitt werden die Kräfte, welche durch das einströmende Gas auf den Rotor wirken, so groß, daß es zu kritischen Situationen kommen kann, in denen z.B. der Rotor durch Überlastung des Axiallagers in Kontakt mit den Notlagern kommt. Bei mittleren Querschnitten überschneiden sich die beiden nachteiligen Wirkungen, so daß durch die Variation des Querschnittes der Ventilöffnung keine befriedigende Lösung erreicht wird. Dazu kommt noch, daß bei gleicher Baugröße einer Pumpe Rezipienten mit sehr unterschiedlichen Volumina angeschlossen werden können, was zusätzlich die Vorausbestimmung optimaler Flutbedingungen für einen bestimmten Pumpentyp erschwert.

Eine Möglichkeit, die Flutrate zu variieren, besteht darin, das Flutventil in zeitlich fest vorgegebenen Intervallen zu öffnen oder zu schließen. Dies erfordert einen Zusatzaufwand, welcher durch die Ergebnisse nicht gerechtfertigt wird. Ein optimaler Flutvorgang ist auch hiermit nicht zu erreichen, da unterschiedliche Rahmenbedingungen, wie z.B. Rezipientengröße, Art und Druck des Flutgases und Betrieb der Vorpumpe hierbei nicht berücksichtigt werden. Es ergeben sich je nach Taktzeiten die gleichen Nachteile wie oben beschrieben.

Eine Lösung wird in der DE-OS 40 22 523 aufgezeichnet. Hier wird die optimale Flutrate dadurch erreicht, daß die Kräfte, welche auf den Rotor wirken, gemessen werden und dadurch über eine Steuereinrichtung das Flutventil angesteuert wird. Die Öffnungszeiten des Flutventils werden dann so optimiert, daß eine möglichst große Gasmenge eingelassen wird, wobei die Kräfte, die dann insgesamt auf den Rotor wirken, einen vorgegebenen Wert, welcher durch Sicherheitskriterien bestimmt wird, nicht überschreiten. Bei Rotoren mit aktiv geregelter Magnetlagerung bietet sich in den meisten Fällen eine Kraftmessung über die im Regelkreis des Magnetlagers ohnehin zur Verfügung stehenden Meßwerte an. In diesem Fall ist der Strom im Elektromagneten des Magnetlagers ein direktes Maß für die Kraft.

Es gibt jedoch einige Kriterien, welche bei der eben beschriebenen Lösung nicht berücksichtigt wurden.

Die optimale Position des Rotors wird begrenzt durch obere und untere Werte der Luftspalte im axialen Magnetlager. Die maximale Spaltbreite ist dadurch begrenzt, daß mit größerem Spalt die Kräfte im Lager sich verringern, so daß ab einem gewissen Wert eine stabile Position des Rotors nicht mehr gewährleistet ist.

Mit Verringerung des Spaltes nehmen die Kräfte zu, gleichzeitig erhöhen sich die Eigenfrequenzen des Regelkreises, bis sie nicht mehr gedämpft werden können, und der Regelkreis somit instabil wird. Dadurch ist die Untergrenze für den zugehörigen Luftspalt gegeben.

Außerdem erhöhen sich mit kleinerem Luftspalt auch die Kräfte auf den Rotor, die aufgrund der Arbeitsbewegung des Regelkreises und der immer vorhandenen mehr oder minder starken Störungen entstehen und somit auch die Reaktionskräfte auf das Pumpengehäuse. In einer großen Anzahl von Anwendungsfällen sind diese Vibrationen des Pumpengehäuses sehr störend oder sogar unzulässig. Daher sollte der Spalt des Magnetlagers im Dauerbetrieb möglichst nahe am oberen Grenzwert bleiben.

Der Erfindung liegt die Aufgabe zugrunde, eine Fluteinrichtung für magnetisch gelagerte Vakuumpumpen mit schnell laufendem Rotor vorzustellen, die die vorhandenen derartigen Einrichtungen verbessert, ohne den technischen Aufwand zu vergrößern.

Die Aufgabe wird durch die kennzeichnenden Merkmale des Patentanspruches 1 gelöst.

Die Lösung erlaubt ein optimales Fluten einer magnetisch gelagerten Vakuumpumpe mit schnell laufendem Rotor unter Ausnutzung der höheren Tragfähigkeit des Magnetlagers bei geringerem Spalt. Die in diesem Falle auftretenden größeren Vibrationen stören nicht, da die Pumpe sich im Auslaufen befindet.

Gemäß Anspruch 2 wird im Dauerbetrieb die für diesen Fall optimale Spaltbreite beibehalten und so ein sicherer und ruhiger Lauf gewährleistet.

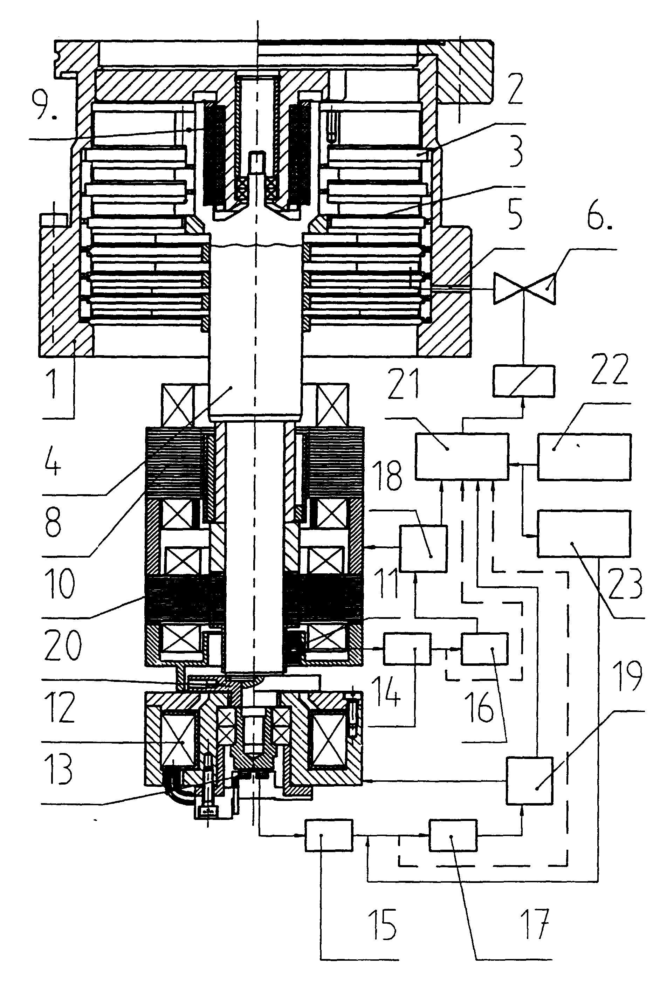

Anhand der einzigen Abbildung soll die Erfindung am Beispiel einer magnetisch gelagerten Turbomolekularpumpe erläutert werden.

Im Gehäuse 1 einer Turbomolekularpumpe befinden sich die Pumpelemente, bestehend aus den Statorscheiben 2 und den Rotorscheiben 3, welche mit der Rotorwelle 4 verbunden sind. Zum Flutgaseinlaß ist am Gehäuse ein Gaseinlaßstutzen 5 mit dem steuerbaren Flutventil 6 angebracht. Die Antriebsvorrichtung für die Rotorwelle ist mit 8 bezeichnet. Die Lagerung des Rotors erfolgt in dem hier dargestellten Beispiel durch ein passives magnetisches Radiallager 9 auf der oberen Seite der Pumpe, auf der sich der Ansaugstutzen befindet, durch ein aktives magnetisches Radiallager 10 unterhalb der Antriebseinheit 8 und durch ein aktives magnetisches Axiallager 12 am unteren Ende der Rotorwelle. Die Radialsensoren 11 und der Axialsensor 13 dienen zur Messung der radialen, bzw. axialen Position der Rotorwelle. Durch die Sensorauswertungen 14, 15 und die Regler 16, 17 entstehen Steuersignale, welche über Leistungsverstärker 18, 19 die Ströme in den aktiven Magnetlagern so regeln, daß der Rotor in einer stabilen Position bleibt.

Die Regelung des aktiven magnetischen Axiallagers erfolgt z.B. so, daß die Spalte zwischen den Axialmagneten 12 und der Axiallagerscheibe 20 konstant sind. Wirkt eine zusätzliche Kraft auf den Rotor, dann ändert sich der Strom in den Elektromagneten und ist somit ein direktes Maß für die Kraft.

Durch die Grenzwertüberwachung 21 wird das Flutventil 6 bei Überschreitung einer vorgegebenen Stromstärke, welche einer bestimmten Kraft auf den Rotor entspricht, geschlossen. Danach findet innerhalb der Pumpe ein Druckausgleich statt, wodurch die Kraft auf den Rotor wieder abnimmt. Damit sinkt auch die Stromstärke und das Flutventil wird wieder geöffnet.

Erfindungsgemäß ist zusätzlich eine Sollwertvorgabeeinheit 23 vorhanden, welche beim Starten des Flutvorganges durch eine Ablaufsteuerung 22 in den Regelkreis 15, 17, 19 des axialen Magnetlagers 12 eingreift. Dabei wird der Luftspalt zwischen der Axiallagerscheibe 20 und dem Axialmagneten 12 so weit verringert, wie es regeltechnisch zulässig ist. Das axiale Magnetlager 12 hat jetzt seine maximale Tragfähigkeit und kann die großen Kräfte, welche durch den Flutvorgang hervorgerufen werden, aufnehmen. Im Normalbetrieb wird der Luftspalt bis zu einem oberen Grenzwert vergrößert. Dadurch werden Vibrationen weitgehend vermieden und ein ruhiger und sicherer Lauf des Rotors ist gewährleistet. Die Dauer des Flutvorganges wird auf ein Minimum gesenkt.

Die Aufgabenstellung und die Lösung sind nicht auf das angegebene Beispiel beschränkt. Sie können ebenso gut auf andere Arten von Vakuumpumpen und deren magnetische Lagerungen, ob axial oder radial, angewandt werden.

## Patentansprüche

1. Einrichtung zum Fluten von magnetisch gelagerten Vakuumpumpen mit schnell laufendem Rotor mit mindestens einem aktiv geregelten elektromagnetischen Axiallager und mit einer steuerbaren Fluteinrichtung, dadurch gekennzeichnet, daß eine Sollwertvorgabeeinheit (23) vorhanden ist, welche bei Starten des Flutvorganges durch eine Ablaufsteuerung (22) in den Regelkreis (15, 17, 19) des axialen Magnetlagers (12) so eingreift, daß der Luftspalt zwischen der Axiallagerscheibe (20) und dem Axialmagneten (12) soweit wie regeltechnisch zulässig, das heißt soweit, daß des Regelkreis nicht instabil wird, verringert wird.

2. Einrichtung zum Fluten von magnetisch gelagerten Vakuumpumpen mit schnell laufendem Rotor nach Anspruch 1 dadurch gekennzeichnet, daß die Sollwertvorgabeeinheit (23) den Luftspalt zwischen der Axiallagerscheibe (20) und dem Axialmagneten (12) im Normalbetrieb auf einen oberen Grenzwert einregelt.

## Claims

1. A means for venting magnetically mounted vacuum pumps with a fast-running rotor, with at least one actively regulated electromagnetic thrust bearing and with a controllable venting means, characterised in that a setpoint input unit (23) is provided which, on starting of the venting process by a sequence control system (22), intervenes in the regulating circuit (15, 17, 19) of the axial magnetic bearing (12) in such a way that the air gap between the thrust bearing plate (20) and the axial magnet (12) is reduced as far as control principles allow, that is to say, provided that the regulating circuit does not become unstable.

2. A means for venting magnetically mounted vacuum pumps with a fast-running rotor according to claim 1, characterised in that the setpoint input unit (23) adjusts the air gap between the thrust bearing plate (20) and the axial magnet (12) to an upper limit in normal operation.

## Revendications

1. Dispositif de remplissage de pompes à vide à paliers magnétiques à rotor en rotation rapide comportant au moins un palier axial électromagnétique à régulation active et un dispositif réglable de remplissage, caractérisé en ce qu'il est prévu une unité de prescription (23) de valeur de consigne qui intervient au début du processus de remplissage au moyen d'une commande séquentielle (22) dans le circuit régulateur (15, 17, 19) du palier magnétique axial (12) d'une manière telle que l'entrefer entre le disque (20) de palier axial et l'aimant axial (12) est réduit dans toute la mesure admissible par les techniques de réglage, c'est-à-dire sans atteindre la limite où le circuit régulateur deviendrait instable.

2. Dispositif de remplissage de pompes à vide à paliers magnétiques à rotor en rotation rapide selon la revendication 1, caractérisé en ce que l'unité de prescription (23) de valeur de consigne règle en fonctionnement normal à une valeur limite supérieure l'entrefer entre le disque (20) de palier axial et l'aimant axial (12).
